(19) Europäisches Patentamt
European Patent Office
Office européen des brevets

(11) **EP 2 178 035 A1**

(12) **EUROPÄISCHE PATENTANMELDUNG**

(43) Veröffentlichungstag:
**21.04.2010  Patentblatt 2010/16**

(51) Int Cl.:
***G06Q 10/00*** *(2006.01)*   ***B60P 1/00*** *(2006.01)*
***G01B 17/06*** *(2006.01)*

(21) Anmeldenummer: **09172530.9**

(22) Anmeldetag: **08.10.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **17.10.2008   DE 102008051726**

(71) Anmelder:
• **Contronix GmbH**
  **01445 Radebeul (DE)**

• **Ubigrate GmbH**
  **01277 Dresden (DE)**

(72) Erfinder:
• **Gommel, Christoph**
  **01159 Dresden (DE)**
• **Neugebauer, Mario**
  **01187 Dresden (DE)**

(74) Vertreter: **Adler, Peter**
  **Lippert, Stachow & Partner**
  **Krenkelstrasse 3**
  **01309 Dresden (DE)**

(54) **Verfahren und Anordnung zur Leerraummessung für Lager- oder Transporträume**

(57)   Der Erfindung, welche ein Verfahren und eine Anordnung zur Leerraummessung für Lager- oder Transporträume welche eine Grundfläche und mehrere Seitenflächen aufweisen, betrifft, liegt die Aufgabe zugrunde, ein Verfahren und eine Anordnung zur Leerraummessung für Lager- oder Transporträume, anzugeben, mit welchem die Belegung eines Lager- oder Transportraums erfasst und freie Teilbereiche erkannt und ausgegeben werden. Die Aufgabe wird anordnungsseitig dadurch gelöst, dass mehrere Sensoren zur Abstandsmessung in einem Flächenraster gegenüber der Grundfläche und/oder einer oder mehreren Seitenflächen in dem Lager- oder Transportraum angeordnet sind.

FIG 1

EP 2 178 035 A1

**Beschreibung**

Die Erfindung betrifft ein Verfahren zur Leerraummessung für Lager- oder Transporträume welche eine Grundfläche und mehrere Seitenflächen aufweisen.

Die Erfindung betrifft auch eine Anordnung zur Leerraummessung für Lager- oder Transporträume welche eine Grundfläche und mehrere Seitenflächen aufweisen.

Volumenabschätzung und Füllstandsmessung aus dem Stand der Technik werden mittels Ultraschall- oder Lasermesstechnik realisiert.

Es ist dabei bekannt, ein Sende- und Empfangselement in einem Behälter oder Raum anzuordnen, so dass der Abstand zur Oberfläche des im Behälter oder Raum befindlichen Füllguts gemessen werden kann. Aus der vorher bekannten Geometrie, insbesondere dem Grundriss und Querschnitt und dem gemessenen Abstand kann das im Behälter oder Raum freie und belegte Volumen berechnet werden.

Aufgrund der Messung durch Impulslaufzeiten kann der Abstand des Sensors zur Oberfläche des Füllguts nur näherungsweise über das Minimum, den Mittelwert oder das Maximum des Abstandes bestimmt werden.

Ein wesentlicher Nachteil dieser Füllstandsmessung aus dem Stand der Technik besteht darin, dass nicht in verschiedenen Bereichen des Raumes oder Behältnis differenziert gemessen werden kann. Im Lager- oder Transportraum unregelmäßig befindliche Füllgüter können deshalb nur ungenau erfasst werden, d. h. dass freie Bereiche im Lager- oder Transportraum nicht erkannt werden, weil durch den gemessenen Abstand in nur einem Punkt der Raum als homogen befüllt angenommen wird.

Der Erfindung liegt somit die Aufgabe zugrunde, ein Verfahren und eine Anordnung zur Leerraummessung für Lager- oder Transporträume, welche eine Grundfläche und mehrere Seitenflächen aufweisen, anzugeben, mit welchem die Belegung eines Lager- oder Transportraums erfasst und freie Teilbereiche erkannt und ausgegeben werden.

Die Aufgabe der Erfindung wird verfahrensseitig dadurch gelöst, dass die Grundfläche und/oder die Seitenflächen des Lager- oder Transportraums in Teilflächen eines Flächenrasters unterteilt werden, dass gegenüber einer Teilfläche und innerhalb des Lager- oder Transportraums ein Sensor zur Abstandsmessung angeordnet ist, dass zur Kalibrierung je Teilfläche eine Abstandsmessung derart durchgeführt wird, dass ein Abstand zwischen dem Sensor und der zugehörigen Teilfläche ermittelt wird, dass die so ermittelten Kalibrierungs-Messdaten aller Sensoren an eine zentrale Instanz übermittelt und von dieser als Kalibrierungsdaten gespeichert werden, dass zur Leerraummessung je Teilfläche eine Abstandsmessung derart durchgeführt wird, dass ein Abstand zwischen dem Sensor und der zugehörigen Teilfläche oder einem zumindest teilweise im Messbereich des Sensors befindlichen Körper ermittelt wird, dass die Messdaten aller Sensoren an eine zentrale Instanz übermittelt und derart verarbeitet werden, dass durch einen Vergleich der Messdaten mit den Kalibrierungsdaten Informationen über die Belegung des Lager- oder Transportraums erzeugt und ausgegeben werden. Sensoren für eine Abstandsmessung werden über einer ebenen oder unebenen Oberfläche nach Art einer Matrix in gleichmäßigen oder ungleichmäßigen Abständen zueinander verteilt. Ein derartiger Sensor verfügt über eine Sende- und eine Empfangseinrichtung, mittels welcher ein Signal von der Sendeeinrichtung abgestrahlt und nach der Reflexion dieses Signals beispielsweise an einem Gegenstand von der Empfangseinrichtung empfangen wird. Über die Signallaufzeit kann dann auf die Entfernung zwischen Sensor und Gegenstand geschlossen werden. Dabei ist jedem Sensor eine dem Sensor gegenüberliegende Teilfläche zugeordnet, wobei die Teilflächen vorteilhaft derart zueinander angeordnet werden, dass die Teilflächen in ihrer Gesamtheit beispielsweise die Grundfläche des Lagerraums abdecken. Die Teilflächen können verschiedenartig geformt sein.

Zur Kalibrierung des Systems auf den jeweiligen Lager- oder Transportraum wird bei einem leeren Raum eine Kalibrierungsmessung durchgeführt und die Kalibrierungs-Messdaten für eine spätere Leerraumbestimmung als Vergleichsdaten gespeichert.

Im laufenden Betrieb werden nachfolgend weitere Messungen als Leerraummessung je festgelegter Teilfläche durchgeführt. Diese Messungen können periodisch auf Anfrage oder durch eine Zustandsänderung bedingt generiert werden. Als Zustandsänderung kann ein Öffnen einer Lagerraumtür in Frage kommen.

Alle Messdaten werden jeweils an eine zentrale Instanz zur Speicherung und Auswertung übertragen. Hierfür sind die Sensoren beispielsweise über ein Bussystem mit der zentralen Instanz verbunden. Die zentrale Instanz ist entweder lokal in der Nähe des Lager-/Transportraumes oder in einem entfernten, über Datenfernübertragung erreichbaren Computer angeordnet. Je nach Leistungsfähigkeit der Instanz und nach Bedarf der Algorithmik kann auch eine Vorverarbeitung der Messdaten in einer bei den Sensoren zur Abstandsmessung angeordneten Einheit vor der Übertragung der Daten an die zentrale Instanz stattfinden.

Nach der Übertragung der Messdaten jeder Leerraummessung vergleicht die zentrale Instanz die Messwerte jedes Sensors mit den zugehörigen Kalibrierungs-Messdaten des entsprechenden Sensors und ermittelt derart die Belegung der Teilfläche dieses Sensors. Die Daten der Belegung der Teilfläche werden zu Belegungsdaten für den gesamten Lager- oder Transportraum zusammengefasst und von der zentralen Instanz ausgegeben. Diese ausgegebenen Belegungsdaten können nachfolgend weiter übertragen oder ausgewertet werden, um beispielsweise ein Fahrzeug mit noch verfügbaren Belegungskapazitäten in seiner Routenführung derart zu steuern, dass eine bessere Ausnutzung der Belegungskapazitäten dieses Fahrzeugs ermöglicht wird.

In einer Ausführung der Erfindung ist vorgesehen, dass das Flächenraster Zeilen und Spalten aufweist.

Das Flächenraster, in welches eine Grund- oder Seitenfläche eines Lager- oder Transportraumes unterteilt wird weist Zeilen und Spalten in der Form einer Matrix auf.

In einer anderen Ausführung ist vorgesehen, dass die Sensoren entlang einer Spalte oder einer Zeile des Flächenrasters angeordnet sind.

In einer weiteren Ausführung der Erfindung ist vorgesehen, dass die Sensoren über jeder Teilfläche des Flächenrasters angeordnet sind.

Gemäß der Erfindung kann eine Sensor gegenüber einer Teilfläche oder mehrere Sensoren welche in einer Zeile oder Spalte der Matrix angeordnet sind gegenüber ihren jeweiligen Teilflächen angeordnet sein. Auch eine Anordnung in mehreren Zeilen oder mehreren Spalten ist vorgesehen. Um eine größtmögliche Genauigkeit bei der Leerraummessung zu gewährleisten werden Sensoren gegenüber allen Teilflächen der Matrix angeordnet.

In einer Ausgestaltung ist vorgesehen, dass die Teilfläche eine rechteckige, quadratische, kreisförmige oder eine n-eckige Form aufweist.

In einer Ausführungsform ist vorgesehen, dass der Sensor für das Abstandsmessverfahren mittels Ultraschallwellen oder Radarwellen arbeitet.

Die Aufgabe der Erfindung wird anordnungsseitig dadurch gelöst, dass mehrere Sensoren zur Abstandsmessung in einem Flächenraster gegenüber der Grundfläche und/oder einer oder mehreren Seitenflächen in dem Lager- oder Transportraum angeordnet sind.

Als Raster bezeichnet man die gleichmäßige bzw. gezielte, an Bedingungen geknüpfte Unterteilung einer Grund- oder Seitenfläche des Lager- oder Transportraums.

Eine Bedingung für die Positionsfestlegung der Sensoren ist beispielsweise die Abstrahlcharakteristik eines Sensors.

Unter Berücksichtigung der Höhe, Länge und Breite des Raumes, der gewünschten Genauigkeit, mit welcher die Belegung des Lager- oder Transportraumes erfasst werden kann, werden die Teilflächen in Form und Anzahl und somit auch die Anzahl der Sensoren und ihre Positionierung festgelegt.

In einer Ausgestaltung ist vorgesehen, dass mehrere Sensoren in einer gemeinsamen Aufnahmevorrichtung angeordnet sind.

In einer Ausführungsform ist vorgesehen, dass in der gemeinsamen Aufnahmevorrichtung Leitungen zur Stromversorgung und zur Datenübertragung angeordnet sind.

In einer weiteren Ausführungsform ist vorgesehen, dass die gemeinsame Aufnahmevorrichtung von einem Gehäuse umgeben ist.

Für die Verwendung in rauen Umgebungen werden die Sensoren beispielsweise in einer gemeinsamen Aufnahmevorrichtung in Form einer Schiene angeordnet, welche von einem widerstandsfähigen Gehäuse umgeben ist und alle notwendigen Systembestandteile beinhaltet, wie Kabel zur Energieversorgung und Informationsübertragung.

Somit besteht die Möglichkeit zur technisch einfachen und kostengünstigen Befestigung der Sensoren an einer oder mehreren Innenseiten des Lager- oder Transportraums, der durch Wände, Boden und Decke abgeschlossen oder offen sein kann.

Das beschriebene Einbringen der Sensoren in eine gemeinsame Aufnahmevorrichtung ermöglicht ein einfaches Anbringen der Sensoren in dem Lager- oder Transportraum, einen Austausch der gemeinsamen Aufnahmevorrichtung im Fehlerfall und eine Massenfertigung dieser Elemente.

Die Erfindung soll nachfolgend anhand mehrerer Ausführungsbeispiele näher erläutert werden. In den zugehörigen Zeichnungen zeigt

Fig. 1      einen Lager- oder Transportraum mit an der Decken- fläche angebrachten Sensoren zur Abstandsmessung, wobei die Sensoren in einer gemeinsamen Aufnahme- vorrichtung angeordnet sind,

Fig. 2      einen Sensor zur Abstandsmessung mit seiner Ab- strahlcharakteristik,

Fig. 3      a) einen Sensor zur Abstandsmessung mit seiner Abstrahlcharakteristik während einer Kalibrie- rungsmessung,

b) einen Sensor zur Abstandsmessung mit seiner Ab- strahlcharakteristik während einer Leerraummessung,

c) eine durch die Erfindung ermittelte Belegung eines Lager- oder Transportraums,

Fig. 4      ein Darstellung möglicher Teilflächen und ihre Anordnung,

Fig. 5        eine weitere Darstellung möglicher Teilflächen und ihre Anordnung,

Fig. 6        eine Ausführungsform der Leerraummessung in einem Blocklager und

Fig. 7 a/b    eine Ausführung der Leerraummessung für auf einer Stange angeordnete Textilien.

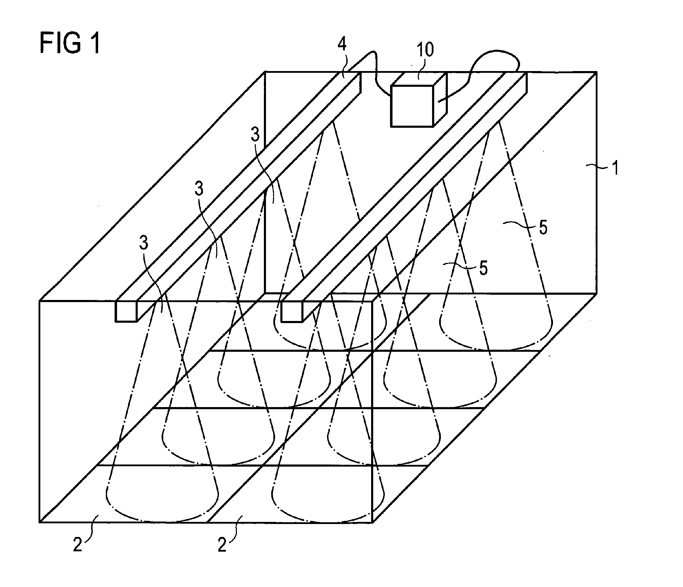

Die Grundfläche und/oder eine oder mehrere Seitenflächen eines Lager- und Transportraums 1 wird in Teilflächen 2 unterteilt, wie in Figur 1 dargestellt.

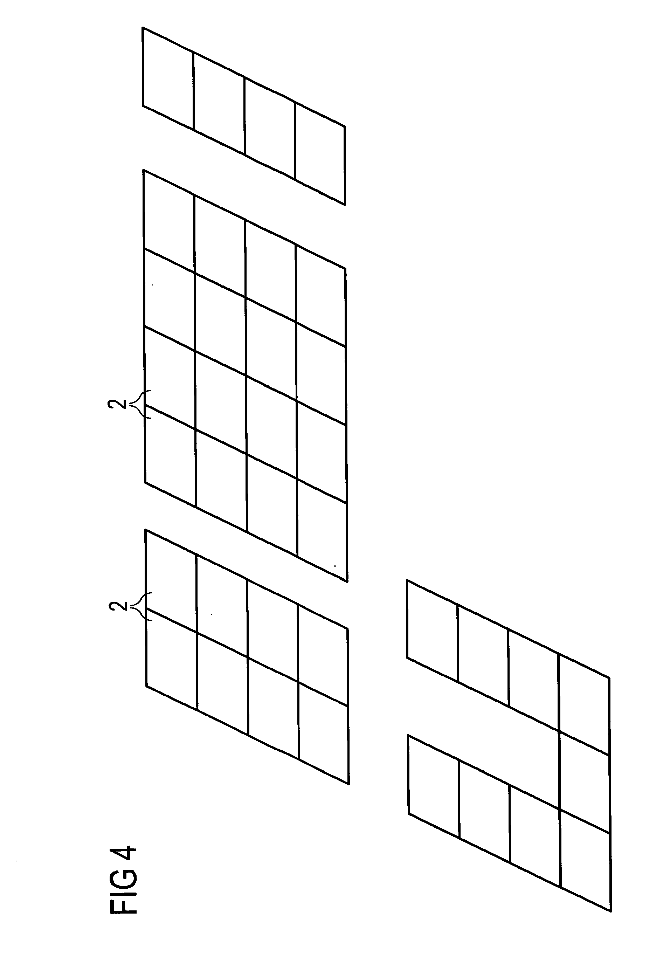

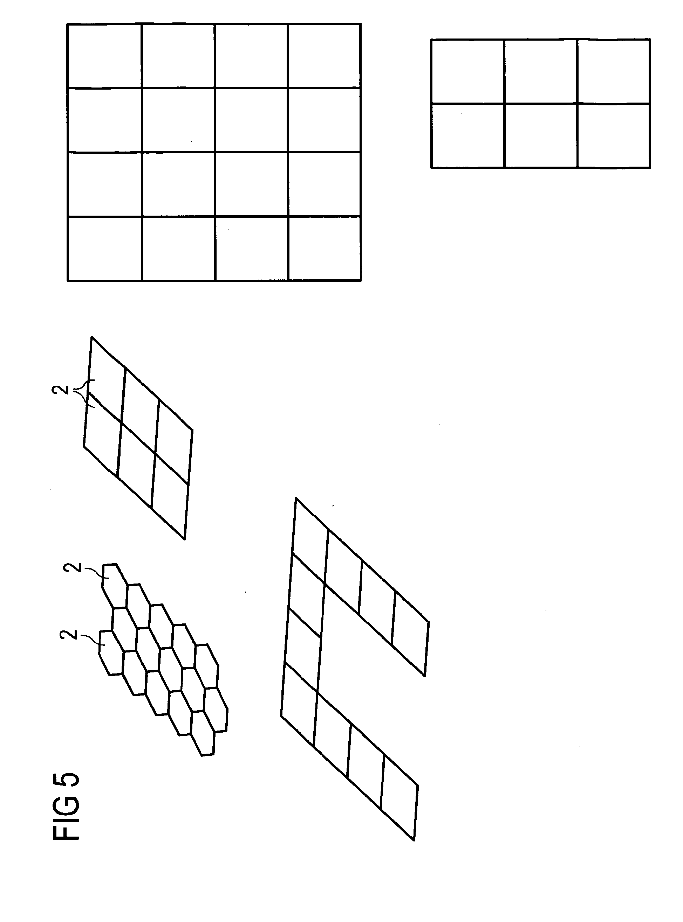

Eine Teilfläche 2 kann kreisförmig oder als n-Eck (z. B. rechteckig, quadratisch, sechseckig) ausgebildet werden. Beispiele für die Ausgestaltung einer Teilfläche und die Anordnung mehrerer Teilflächen 2 zueinander sind in den Figuren 4 und 5 angegeben.

Beispielsweise mittig gegenüber den Teilflächen 2 ist jeweils ein Sensor 3 zur Abstandsmessung angeordnet. Derartige Sensoren 3 können Ultraschall- oder Radarsensoren sein. Durch diese Sensoren 3 werden Ultraschallwellen bzw. elektromagnetische Wellen in annähernd kegelförmiger Weise in Richtung der Teilflächen 2 gesendet, wie beispielsweise in der Figur 1 als Abstrahlcharakteristik 5 dargestellt.

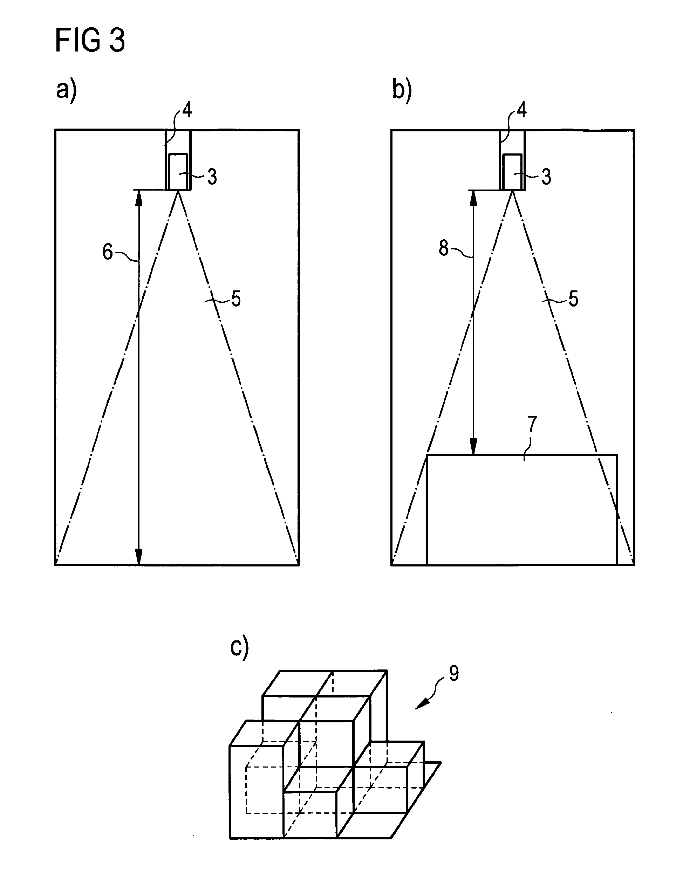

Bei einer Kalibrierung messen die Ultraschall- oder Radarsensoren 3 die verfügbare Höhe 6 des Lager- und Transportraums 1, wie in Figur 3 a dargestellt. Diese verfügbare Höhe 6 wird persistent elektronisch gespeichert und für die spätere Ermittlung des freien Volumens des Lager- und Transportraums 1 genutzt. Derart erfolgt eine Anpassung des Systems an die jeweilige Messumgebung.

Eine Ladung, ein Packstück 7 oder ähnliche, beliebige zu transportierende Gegenstände können für Transport- oder Lagerzwecke auf die Teilflächen 2 verbracht werden. Die Ladung 7 oder die Gegenstände können möglicherweise mehrfach übereinander gestapelt werden. Auch ist eine teilflächenübergreifende Belegung des Lager- und Transportraumes 1 möglich, wobei eine Teilfläche 2 vollständig oder teilweise belegt sein kann.

Während des laufenden Betriebs wird für eine Leerraummessung bei einer Belegung der Teilfläche 2 der verbleibende Abstand 8 zwischen dem Sensor 3 und einem nächstliegenden Packstück 7 gemessen, wie in Figur 3 b dargestellt. Dieser verbleibende Abstand 8 im Verhältnis zur verfügbare Höhe 6 des Lager-und Transportraums 1 gibt den Anteil des frei verfügbaren Lager- bzw. Transportraumes für die zugehörige Teilfläche 2 an.

Durch die Kombination einzelner Füllstände der Teilflächen 2 wird der gesamte Füllstand bzw. freie Raum des volumenhaften Lager- und Transportraums 1 vermessen. Derart werden Aussagen über die reale Belegung 9 des Lager- und Transportraums 1 erzeugt, wie in Figur 3c dargestellt.

Zu diesem Zweck werden sowohl die in der Kalibrierung als auch die während einer Leerraummessung im laufenden Betrieb erzeugten Messdaten an eine zentrale Instanz 10 zur Verarbeitung der Daten übertragen. Mehrere Sensoren 3 können, wie in der Figur 1 dargestellt, in einer gemeinsamen Aufnahmevorrichtung 4 in regelmäßigen oder unregelmäßigen Abständen zueinander angeordnet und mit einem gemeinsamen Bussystem verbunden werden. Bussysteme mehrerer gemeinsamer Aufnahmevorrichtungen 4 werden mit der zentralen Instanz 10 elektrisch verbunden. Somit kann die zentrale Instanz 10 auch die Stromversorgung der Sensoren steuern und Messdaten von den Sensoren erhalten.

Eine Steuerung oder Abschaltung der Stromversorgung durch die zentrale Instanz 10 ist für einen Energiesparmodus möglich. Wenn beispielsweise in einem verschlossenen Lager- und Transportraum 1 keine Änderung der Belegung erfolgen kann, so muss auch keine Leerraummessung erfolgen. Beispielsweise durch ein beim Öffnen des Lager- und Transportraums 1 erzeugten Signals für die zentrale Instanz 10 wird wieder eine Leerraummessung gestartet.

Ultraschallsensoren 3 weisen einen bestimmten Abstrahlwinkel auf und werden in einer bestimmten Höhe angebracht. Daraus ergibt sich eine Fläche, welche durch den Ultraschallsensor 3 erfasst werden kann. Diese Fläche sollte einem möglichst großen Teil der Teilfläche 2 entsprechen.

Eine Feineinstellung ist durch eine trichterförmige Öffnung am Austritt des Ultraschallsensors möglich, wodurch ein geringerer Abstrahlwinkel der Abstrahlcharakteristik 5 eines Sensors 3 und damit auch bei größeren Höhe/Breite-Verhältnissen eine feinere Rasterung erzielt werden. Somit ist eine Anpassung der Sensorinstallation an die geforderte Rasterung möglich.

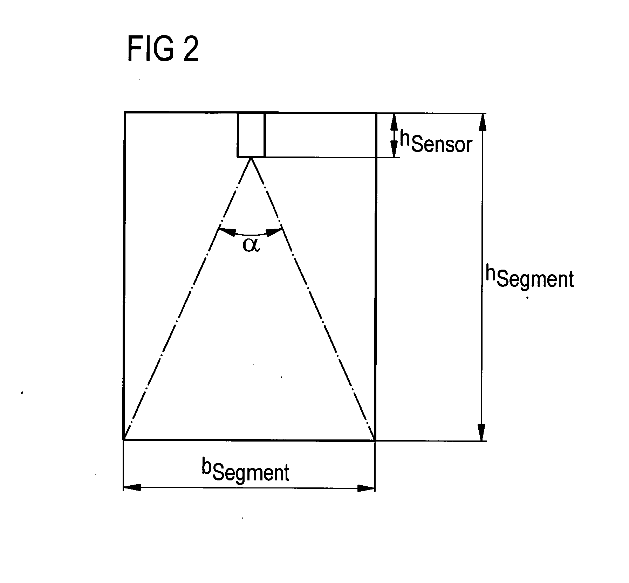

Gemäß Figur 2 ergibt sich zur Berechnung des Verhältnisses der Breite zur Höhe eines über der Teilfläche 2 zu erfassenden Raumes folgende Beziehung.

$$\text{b\_Segment/h\_Segment} = 2 * \tan(\text{alpha/2})$$

Wobei Alpha der Austrittswinkel der Ultraschallwellen aus Sensoroberfläche/-gehäuse darstellt, b_Segment der Breite des zu messenden Segmentes und h_Segment der Höhe des zu messenden Segmentes entspricht.

Beispielsweise in einem Hochregallager werden Paletten oder ähnliche Ladungsträger in verschieden hohen Ebenen in einem Regal eingelagert. Eine Ebene kann horizontal, sowohl in der Regalbreite als auch in der Regaltiefe, in Segmente geteilt werden.

Eigenschaft des Inhalts kann z. B. der Füllstand in den Segmenten sein. An den Decken der Zwischenböden des Hochregals werden die die Sensoren beherbergenden gemeinsamen Aufnahmevorrichtungen in der Form einer Schiene angebracht. Transportfahrzeuge und -geräte, die in die Segmente einfahren, um Lagerbestand zu entnehmen/einzubringen, können die Schienen durch ihre robuste Bauweise nicht beschädigen oder außer Betrieb setzen.

Bei der Kalibrierung werden durch die die Sensoren beherbergenden gemeinsamen Aufnahmevorrichtungen die verfügbaren Höhen für jeden Sensor über seiner Teilfläche aufgenommen. Die Messung des belegten Lagerraumes in einer sogenannten Leerraummessung erfolgt durch Abstandsmessung von dem Zwischenboden nach unten in Richtung der jeweiligen Teilfläche auf dem Segmentboden. Wenn die Entfernung gleich der verfügbaren Höhe ist, wird das Segment als leer angenommen. Es ist der volle Lagerraum verfügbar. Ist die gemessene Entfernung kleiner als die verfügbare Höhe, so liegt eine teilweise Belegung vor. Ist die gemessene Entfernung fast Null, ist die jeweilige Teilfläche voll belegt.

Beispielsweise in einem Blocklager, in welchem auf einer Grundfläche ein Lagerbestand aufbewahrt wird, ist die Lagerfläche durch ein Dach geschlossen. Für diesen Fall können die Schienen für die Beherbergung der Sensoren an den innenliegenden Dachträgern befestigt werden.

Die erfindungsgemäße Anordnung kann auch in Fahrzeugen, Fahrzeugeinbauregalen, Containern oder Schüttgutladeräumen zur Anwendung gelangen.

Nachfolgend wird eine weitere Ausführungsform der Erfindung für eine geringere Messgranularität beschrieben.

In der Matrix bestehend aus den Teilflächen 2 muss nicht jede Teilfläche 2 bezüglich ihres Füllstandes gemessen werden. Es können mit einem festgelegten Rastermaß, regelmäßig oder ausgerichtet an bestimmten Anwendungsbedingungen, nur ausgewählte Teilflächen 2 gemessen werden. In der zentralen Instanz 10 werden die Messdaten für eine Schätzung der Füllstände verwendet.

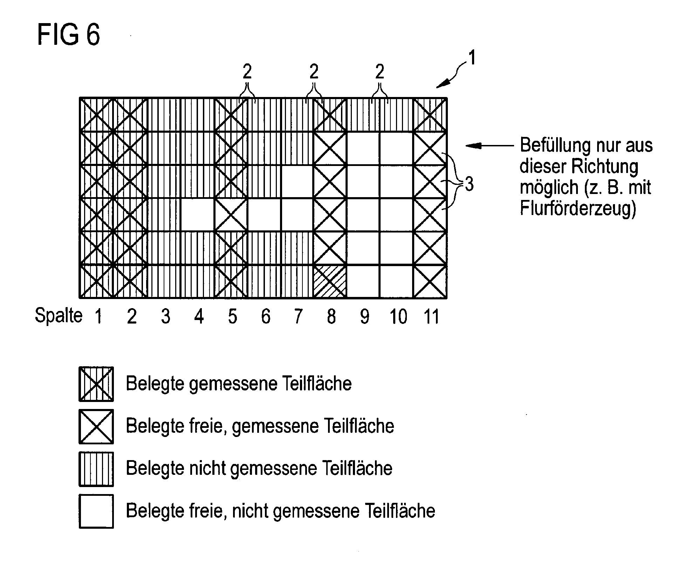

Anwendung kann eine derartige Anordnung beispielsweise in Blocklagern finden. Hierfür werden die Teilflächen 2 des zu erfassende Lager- oder Transportraums 1 in eine Matrix aus Zeilen und Spalten aufgeteilt, wie in der Figur 6 dargestellt.

Wie dargestellt werden die sechs Sensoren 3 beispielsweise in einer gemeinsamen Aufnahmevorrichtung 4 derart angeordnet, dass diese eine Spalte der Matrix abdecken. Im Beispiel werden die Spalten 1, 2, 5, 8 und 11 abgedeckt. Nur in diese Spalten kann eine Messung des Füllstandes erfolgen. Das heißt, dass die Zwischenstände nicht erfasst werden können.

Für eine Abschätzung des Füllstandes des Lager- oder Transportraums 1 ist dies ausreichend. Durch eine derartige Anordnung werden Sensoren 3 eingespart und somit die Kosten für die Messhardware reduziert. Durch die Eigenschaft des Blocklagers, dass die zuletzt eingelagerten Paletten zuerst entnommen werden müssen (First In Last Out) wird die mögliche Richtung für den Abbau und den Zulauf des Bestandes vorgegeben.

In Figur 6 ist beispielhaft eine Draufsicht eines möglichen Blocklagers gezeigt. Das Blocklager kann nur aus der eingezeichneten Richtung befüllt werden. Die Sensoren 3 sind wie oben beschrieben nicht über jeder Teilfläche 2 angebracht, wobei im Bereich eines geringen Füllstandes des Blocklagers, also in der 1. und 2. Spalte Sensoren 3 angeordnet sind, um eine höhere Auflösung bei der Leerraummessung zu erreichen. Somit wird im Bereich kritischer Mindestmengen genauer gemessen.

Nachfolgend wird eine weitere Ausführungsform der Erfindung für eine horizontale Leerraummessung beschrieben.

In einer weiteren Ausführungsform sind die Teilfläche 2 und der gegenüberliegende Sensor 3 in horizontaler Richtung angeordnet. Dadurch können Füllstände in horizontal angeordneten Lagerräumen/-bereichen gemessen werden.

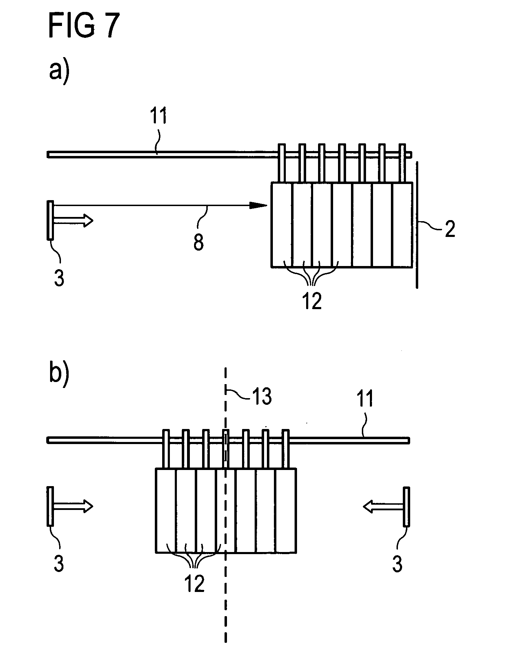

Die Figur 7 zeigt eine mögliche Ausführungsform der horizontalen Leerraummessung. Auf einer in dem Lagerraum 1 horizontal angeordneten Stange 11 hängen Waren, welche zur Ein- und Auslagerung in horizontaler Richtung bewegt werden. Ein Beispiel hierfür sind Kleiderbügel oder Textilien 12 auf einem Kleiderbügel auf der Stange 11. Der Sensor 3 misst den Abstand 8 bis zu der ersten hängenden Ware 12, wie in der Figur 7 a dargestellt.

Eine andere Möglichkeit der horizontalen Leerraummessung besteht darin, mit zwei gegenüberliegend angeordneten Sensoren 3 von beiden Seiten der Textilien 12 parallel zu der warenaufnehmenden Stange 11 zu messen, wie in der Abbildung 7 b dargestellt. In diesem Beispiel ist es notwendig für die Kalibrierung einmalig eine Teilfläche 2, beispielsweise mittig zwischen beide Sensoren 3 einzubringen. Nachfolgend werden von beiden Sensoren 3 die Abstände zu den Textilien 12 in je einer Teilmessung gemessen und die Messwerte zur zentralen Instanz 10 übertragen. Diese kann dann die Teilmessungen verarbeiten. Je Messung kann dann eine Teilfüllhöhe bezogen auf eine virtuelle Teilfläche 13 erzeugt werden. Die Teilfüllhöhen werden nachfolgend zu einer resultierenden Gesamtfüllhöhe verarbeitet.

In einer Besonderen Realisierung der Erfindung ist vorgesehen, dass neben den Sensoren 3 für die Leerraummessung Sensoren für eine automatische Identifikation angeordnet sind. Somit kann zum Einen eine Leerraummessung wie beschrieben und zum Anderen beispielsweise per RFID-Technik (Radio Frequency Identification) eine Identifizierung einer bestimmten Ware oder einer Palette auf der zugehörigen Teilfläche 2 im Lager- und Transportraum erfolgen.

Beispielsweise beim Einsatz von sogenannten Rollgitterwagen in Lager- und Transporträumen kommt es vor, dass die von den Sensoren empfangenen Echos bedingt durch die Form der Rollgitterwagen verzerrt sind. Somit kann eine Füllhöhe nur fehlerbehaftet ermittelt werden. Durch eine zusätzliche Identifizierung des Rollwagens mittels seines RFID-Signals kann eine verbesserte Aussage der Leerraummessung erreicht werden da über diese Daten auf die Bauform oder Größe des Packstücks oder des Körpers innerhalb des Messbereiches geschlossen werden kann.

Eine andere Möglichkeit zur Identifizierung der Waren ist der sogenannte Barcode.

Das von den Sensoren 3 empfangene reflektierte Empfangssignal besteht meist aus einem Haupt- und mehreren nachfolgenden Nebenechos. Gemäß der Erfindung kann entweder das Hauptecho zur Leerraummessung genutzt werden oder es werden sowohl das Haupt- als auch die Nebenechos ausgewertet. Die Auswertung beider Echos ermöglicht neben einer Bestimmung des verbleibenden Abstands 8 einen Rückschluss auf das Packstück bzw. den Körper 7 selbst, da je nach Oberfläche und Beschaffenheit ein anderes reflektiertes Signal empfangen wird. Somit kann erfindungsgemäß eine Rückschluss auf verschiedene Materialien wie Metall, Holz, Pappe oder Pflanzen gezogen werden.

Erfindungsgemäß besteht die Möglichkeit mittels eines Sensors 3 ein Sendesignal zu senden und ein daraus resultierendes Empfangssignal zu empfangen. Eine andere Möglichkeit besteht darin, dass ein erster Sensor 3 ein Sendesignal aussendet, welches von einem zweiten oder mehreren benachbarten Sensoren 3 empfangen wird. Die Auswertung dieser Messdaten erfolgt durch die zentrale Instanz 10.

## **Bezugszeichenliste**

1    Lager- oder Transportraum
2    Teilfläche
3    Sensor
4    gemeinsame Aufnahmevorrichtung
5    Abstrahlcharakteristik eines Sensors
6    verfügbare Höhe des Lager- oder Transportraums
7    Packstück/Körper
8    verbleibender Abstand
9    erfindungsgemäß ermittelte Belegung des Lager- oder Transportraums
10   zentrale Instanz
11   Stange
12   Textilien 13 virtuelle Teilfläche

## **Patentansprüche**

1.  Verfahren zur Leerraummessung für Lager- oder Transporträume welche eine Grundfläche und mehrere Seitenflächen aufweisen, **dadurch gekennzeichnet, dass** die Grundfläche und/oder die Seitenflächen des Lager- oder Transportraums in Teilflächen (2) eines Flächenrasters unterteilt werden, dass gegenüber einer Teilfläche (2) und innerhalb des Lager- oder Transportraums (1) ein Sensor (3) zur Abstandsmessung angeordnet ist,
dass zur Kalibrierung je Teilfläche (2) ein Abstandsmessung derart durchgeführt wird, dass ein Abstand zwischen dem Sensor (3) und der zugehörigen Teilfläche (2) ermittelt wird, dass die so ermittelten Kalibrierungs-Messdaten aller Sensoren (3) an eine zentrale Instanz (10) übermittelt und von dieser als Kalibrierungsdaten gespeichert werden, dass zur Leerraummessung je Teilfläche (2) eine Abstandsmessung derart durchgeführt wird, dass ein Abstand zwischen dem Sensor (3) und der zugehörigen Teilfläche (2) oder einem zumindest teilweise im Messbereich des Sensors (3) befindlichen Körper (7) ermittelt wird, dass die Messdaten aller Sensoren (3) an eine zentrale Instanz (10) übermittelt und derart verarbeitet werden, dass durch einen Vergleich der Messdaten mit den Kalibrierungsdaten Informationen über die Belegung des Lager- oder Transportraums (1) erzeugt und ausgegeben werden.

2.  Verfahren nach Anspruch 1, **dadurch gekennzeichnet, dass** das Flächenraster Zeilen und Spalten aufweist.

3.  Verfahren nach Anspruch 1 oder 2, **dadurch gekennzeichnet, dass** die Sensoren (3) entlang einer Spalte oder einer Zeile des Flächenrasters angeordnet sind.

4.  Verfahren nach Anspruch 1 oder 2, **dadurch gekennzeichnet, dass** die Sensoren (3) über jeder Teilfläche (2) des Flächenrasters angeordnet sind.

**5.** Verfahren nach einem der Ansprüche 1 bis 4, **dadurch gekennzeichnet, dass** die Teilfläche (2) eine rechteckige, quadratische, kreisförmige oder ein n-eckige Form aufweist.

**6.** Verfahren nach einem der Ansprüche 1 bis 5, **dadurch gekennzeichnet, dass** der Sensor (3) für das Abstandsmessverfahren mittels Ultraschallwellen oder Radarwellen arbeitet.

**7.** Anordnung zur Leerraummessung für Lager- oder Transporträume welche eine Grundfläche und mehrere Seitenflächen aufweisen, **dadurch gekennzeichnet, dass** mehrere Sensoren (3) zur Abstandsmessung in einem Flächenraster gegenüber der Grundfläche und/oder einer oder mehreren Seitenflächen in dem Lager- oder Transportraum (1) angeordnet sind.

**8.** Anordnung nach Anspruch 7, **dadurch gekennzeichnet, das** s mehrere Sensoren (3) in einer gemeinsamen Aufnahmevorrichtung (4) angeordnet sind.

**9.** Anordnung nach Anspruch 8, **dadurch gekennzeichnet, dass** in der gemeinsamen Aufnahmevorrichtung (4) Leitungen zur Stromversorgung und zur Datenübertragung angeordnet sind.

**10.** Anordnung nach Anspruch 8 oder 9, **dadurch gekennzeichnet, dass** die gemeinsame Aufnahmevorrichtung (4) von einem Gehäuse umgeben ist.

FIG 1

# FIG 2

$h_{Sensor}$

$h_{Segment}$

$\alpha$

$b_{Segment}$

# FIG 3

a)

b)

c)

FIG 4

2    2

EP 2 178 035 A1

FIG 5

## FIG 6

Spalte 1 2 3 4 5 6 7 8 9 10 11

Befüllung nur aus dieser Richtung möglich (z. B. mit Flurförderzeug)

Belegte gemessene Teilfläche

Belegte freie, gemessene Teilfläche

Belegte nicht gemessene Teilfläche

Belegte freie, nicht gemessene Teilfläche

# FIG 7

## a)

## b)

Europäisches
Patentamt

European
Patent Office

Office européen
des brevets

**EUROPÄISCHER RECHERCHENBERICHT**

**Nummer der Anmeldung**

EP 09 17 2530

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 001480 B3 (MAX PLANCK GESELLSCHAFT [DE]) 26. Oktober 2006 (2006-10-26) * das ganze Dokument * ----- | 1-10 | INV. G06Q10/00 B60P1/00 G01B17/06 |
| A | US 2001/030599 A1 (ZIMMERMANN UWE [DE] ET AL) 18. Oktober 2001 (2001-10-18) * Zusammenfassung; Abbildung 1 * ----- | 1-10 | |
| A | DE 197 38 475 A1 (BALTUS RENE [DE]) 4. März 1999 (1999-03-04) * Zusammenfassung * ----- | 1-10 | |
| A | DE 295 19 466 U1 (ELBEN RUEDIGER [DE]) 4. April 1996 (1996-04-04) * das ganze Dokument * ----- | 1-10 | |
| | | | **RECHERCHIERTE SACHGEBIETE (IPC)** G06Q B60P G01B |

Der vorliegende Recherchenbericht wurde für alle Patentansprüche erstellt

| Recherchenort | Abschlußdatum der Recherche | Prüfer |
|---|---|---|
| München | 25. Januar 2010 | Hopper, Eva |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 17 2530

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-2010

| Im Recherchenbericht angeführtes Patentdokument | Datum der Veröffentlichung | Mitglied(er) der Patentfamilie | Datum der Veröffentlichung |
|---|---|---|---|
| DE 102005001480 B3 | 26-10-2006 | KEINE | |
| US 2001030599 A1 | 18-10-2001 | DE 10018302 A1<br>JP 2002012295 A<br>SE 0101290 A | 25-10-2001<br>15-01-2002<br>14-10-2001 |
| DE 19738475 A1 | 04-03-1999 | KEINE | |
| DE 29519466 U1 | 04-04-1996 | DE 29505136 U1 | 22-06-1995 |

Für nähere Einzelheiten zu diesem Anhang : siehe Amtsblatt des Europäischen Patentamts, Nr.12/82

EPO FORM P0461